# NEUE EUROPÄISCHE PATENTSCHRIFT

(11) **EP 1 224 499 B2**
(45) Veröffentlichungstag und Bekanntmachung des Hinweises auf die Entscheidung über den Einspruch: **28.12.2011**
(45) Hinweis auf die Patenterteilung: 06.08.2003
(21) Anmeldenummer: 99947800.1
(22) Anmeldetag: 13.10.1999
(51) Int. Cl.: G02B 21/00

(54) **STEREO-OPERATIONSMIKROSKOP MIT EINER INFORMATIONS-EINSPIEGELVORRICHTUNG**
STEREO OPERATING MICROSCOPE COMPRISING A SINGLE-MIRROR DEVICE PROVIDING INFORMATION
STEREOMICROSCOPE POUR INTERVENTIONS CHIRURGICALES AVEC DISPOSITIF DE REFLEXION DES INFORMATIONS

(43) Veröffentlichungstag der Anmeldung: 24.07.2002
(73) Patentinhaber: Leica Microsystems (Schweiz) AG, 9435 Heerbrugg (CH)
(72) Erfinder: SPINK, Roger, CH-9442 Berneck (CH); MOSER, Benno, CH-9442 Berneck (CH); WOHLGENANNT, Gunther, A-6832 Bertschuns (AT)
(74) Vertreter: Rosenich, Paul
(86) Internationale Anmeldenummer: PCT/IB1999/001685
(87) Internationale Veröffentlichungsnummer: WO 2001/027659

(56) Entgegenhaltungen:
- EP-A- 0 712 600
- EP-A- 0 723 175
- WO-A-96/36897

## Beschreibung

Die Erfindung betrifft ein Stereo-Operationsmikroskop mit einer Informations-Einspiegelvorrichtung.

Solche Operationsmikroskope werden mehr und mehr angewandt, da sie dem Chirurgen die Möglichkeit geben, weitere visuelle Informationen aufzunehmen, ohne seinen Blickkontakt zum Operationsfeld zu ändern.

Die bekannten Einspiegelvorrichtungen umfassen in der Regel ein Display und eine Optik sowie einen Strahlenteiler, der das eingespiegelte Bild dem Haupt-Strahlengang des Operationsmikroskops überlagert.

Das Ziel aller bekannten Einspiegelvorrichtungen ist, das eingespiegelte Bild dem Chirurgen gleichzeitig mit dem nicht eingespiegelten Bild aus dem Hauptstrahlengang darzustellen. Dies hat insbesondere dort Bedeutung, wo dem Bild des Operationsfeldes Bilder überlagert werden sollen, die durch andere bildgebende Verfahren - z.B. Computer-Tomogramme (CT) - gewonnen wurden. Das Ziel war dabei stets, dass diese Überlagerung möglichst genau - also korreliert bzw. örtlich richtig überlagert - und immer gleichzeitig sein muss, damit der Chirurg von den eingespiegelten Bildinformationen optimal profitieren kann. War die Einspiegelung nicht erforderlich, wurde kein Bild eingespiegelt und überlagert. Eine einzige Ausnahme stellten jene Bildeinblendungen dar, die sich auf andere Patientendaten bezogen als auf die optischen bzw. räumlichen Daten des Operationsgebietes, z.B. auf eingespiegelte Blutdruck- oder Pulswerte.

Der Erfindung liegt gegenüber dem Konzept einer möglichst punktuellen Überlagerung eine andere Überlegung zu Grunde: In bestimmten Situationen wird es ein Chirurg bevorzugen, sich - wenigstens kurzfristig - vollständig auf das Überlagerungsbild konzentrieren zu können, anstelle gleichzeitig auch das Bild aus dem Hauptstrahlengang zu sehen. In der Praxis werden solche bekannten Situationen dadurch gelöst, dass der Chirurg vom Mikroskop aufblickt und auf einen neben dem Mikroskop aufgebauten Monitor blickt, auf dem das überlagerte Bild dargestellt ist. Alternativ blickt er auch auf eine Lichtwand, an der CT- oder Röntgenbilder montiert sind.

Der Erfinder erkannte, dass dieser Vorgang situationsbedingt nachteilig sein kann:
- Erstens benötigt er Zeit;
- zweitens zwingt er die Augen des Chirurgen zu einer zusätzlichen Adaptionsleistung, nämlich zu einem Wechsel vom gut adaptierten Blick durch das Mikroskop auf einen Fernblick mit in der Regel unterschiedlichem Adaptionsbedarf, und
- drittens kann der Blick auf den Monitor bzw. auf die Lichtwand im entscheidenden Moment durch Personen im Operationssaal verdeckt sein.

Der Erfindung liegt somit die Aufgabe zugrunde, eine Verbesserung zu finden, die die angegebenen Nachteile vermeidet und einen schnellen und ohne größeren Aufwand realisierbaren Blick auf ausschließlich das eingespiegelte Bild erlaubt.

Gelöst wird diese Aufgabe durch die Merkmale des Anspruchs 1.

Der Chirurg hat damit die Möglichkeit, auf seinen eigenen Wunsch hin und ohne nennenswerten Aufwand auf das eingespiegelte Bild umzuschalten und sich darauf zu konzentrieren. Er kann dabei seine gewählte Körperhaltung und Augeneinstellung beibehalten und kann durch umstehende Personen nicht behindert werden.

Weitere Verbesserungen bzw. Varianten und erfindungsgemäße Details ergeben sich aus den Unteransprüchen.

Für jeden Teil-Stereostrahlengang ist eine erfindungsgemäße Blende vorgesehen, so dass beide Teilstrahlengänge vom Operationsfeld unterbrochen werden.

Das Anordnen von je einer Blende in jedem Teilstrahlengang erlaubt einerseits das vollständige Abdunkeln des Hauptstrahlenganges, ohne die Augenlider asymmetrisch schließen zu müssen; andererseits erlaubt diese Ausführungsart auch das Einspiegeln von zwei unterschiedlichen Bildinformationen - eine für den rechten und eine für den linken Beobachtungsstrahlengang-, so dass dem Chirurgen insgesamt die folgenden auswählbaren Betrachtungsmöglichkeiten gegeben sind:
- Stereobetrachtung der Operationsstelle ohne Überlagerung;
- monokulare Betrachtung der Operationsstelle mit dem rechten Auge (wird weniger häufig angewendet werden);
- monokulare Betrachtung der Operationsstelle mit dem linken Auge (wird weniger häufig angewendet werden);
- Stereobetrachtung der Operationsstelle mit Stereoüberlagerung eines 3-D-Bildes; dies erfordert für jeden Hauptstrahlengang einen Einspiegelungsstrahlengang und je ein eigenes Überlagerungs-Bildsignal;
- Stereobetrachtung der Operationsstelle mit monokularer Überlagerung eines 2-D-Bildes;dies erfordert für jeden Hauptstrahlengang einen Einspiegelungsstrahlengang und ein gemeinsames Überlagerungs-Bildsignal;
- Stereobetrachtung der Operationsstelle mit monokularer Überlagerung eines am rechten Strahlengang eingespiegelten Bildes;
- Stereobetrachtung der Operationsstelle mit monokularer Überlagerung eines am linken Strahlengang eingespiegelten Bildes;
- monokulare Betrachtung der Operationsstelle durch Schließen eines der beiden Augen bei gleichzeitiger Überlagerung des jeweils betrachteten Strahlenganges mit einem eingespiegelten Bild, dies erlaubt dem Chirurgen das Erfassen von unterschiedlichen Bildinformationen durch wechselndes Schließen seiner beiden Augen, sofern am rechten und am linken Stereo-Teilstrahlengang unterschiedliche Überlagerungsbilder eingespiegelt werden);
- stereoskopische Betrachtung eines eingespiegelten 3-D-Bildes ohne Überlagerung; dies erfordert sowohl am rechten als auch am linken Strahlengang je einen Einspiegelungsstrahlengang;
- monokulare Betrachtung eines eingespiegelten Bildes ohne Überlagerung im rechten oder linken Okularstrahlengang, je nach Einspiegelung;
- wechselnde monokulare Betrachtung durch Einspiegeln von unterschiedlichen Bildern am rechten und linken Strahlengang ohne Überlagerung: dies ermöglicht dem Chirurgen wahlweise das eine oder das andere Bild anzusehen).

Durch eine entsprechende Ansteuerung der Displays für das Einspiegeln, wodurch eine Umschaltmöglichkeit zwischen unterschiedlichen Bildern bei jedem Display realisiert wird, lassen sich die oben angegebenen Möglichkeiten noch vermehren.

Eine besondere Weiterentwicklung der Erfindung besteht in ihrer Koppelung mit einer intelligenten, rechnergestützten, automatischen Blendensteuerung. Eine solche Steuerung kann insbesondere so programmiert sein, dass bei bestimmten Einspiegelsignalen automatisch die jeweils erforderliche Blende oder beide Blenden im Hauptstrahlengang geschlossen werden. Diese Steuerung kann auch das Schliessen bzw. Öffnen der ersten Blende im Beleuchtungsstrahlengang vornehmen.

Bevorzugt kann dabei der Chirurg im voraus programmieren, bei welchen Einspiegelsignalen welche Blendenstellungen getroffen werden sollen. Zusätzlich bleibt ihm jedoch gemäß einer weiteren Entwicklung jederzeit die Möglichkeit eines unmittelbaren Eingriffes zur Herstellung des Blendenzustands, den er sich gerade wünscht.

im obigen Text wird zwar laufend auf einen Chirurgen und auf ein Operationsmikroskop bzw. auf ein Operationsfeld Bezug genommen; die Erfindung ist darauf jedoch nicht eingeschränkt, sondern steht vielmehr auch anderen Benutzern stereoskopischer Mikroskope offen. Erfindungswesentlich ist das wahlweise Verschließen wenigstens eines Hauptstrahlenganges zugunsten der eingespiegelten Bildinformation.

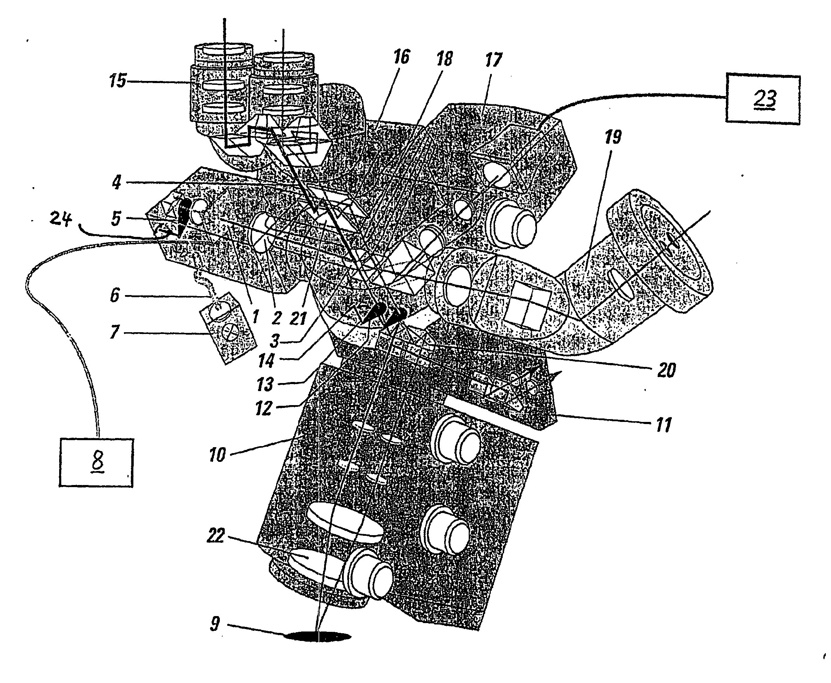

Die Zeichnung zeigt die schematische Darstellung eines Stereo-Operationsmikroskops mit einem Display 1, das mittels Einspiegeloptik 2 und Strahlenteiler 3 in den linken Hauptstrahlengang 4 abgebildet wird. Eine vom Anwender bedienbare erste Blende 5 erlaubt das Abblenden des Displays 1 durch Unterbrechung eines Beleuchtungs-Strahlengangs 6 einer Lichtquelle 7 hinter dem Display 1. In diesem Fall ist die Lichtquelle 7 über einen optischen Lichtleiter angekoppelt.

Es kann im Rahmen der Erfindung jedoch auch ein selbstleuchtendes Display verwendet werden, bei dem dann die erste Blende 5 gegebenenfalls vor dem Display angeordnet ist. Diese Blende stellt an sich eine eigene unabhängige Erfindung dar, die folgende Vorteile mit sich bringt:

Das Einspiegeln von Bildinformationen z.B. mittels LCD erfordert grundsätzlich eine hohe Leuchtdichte. Wird nun z.B. kein eingespiegeltes Bild gewünscht, so kann man grundsätzlich das LCD dunkelsteuern. Ein dunkelgesteuertes LCD lässt jedoch noch immer geringe Mengen Streulicht passieren. Dieses bewirkt - nach seiner Überlagerung auf die Bildinformation im Hauptstrahlengang - unter Umständen eine Kontrastverschlechterung des Bildes vom Operationsfeld. Durch das zusätzliche Abdunkeln der Lichtquelle mit Hilfe der neuartigen Blende 5 wird der Kontrast erfindungsgemäß nicht beeinträchtigt.

Ein gebogener Doppelpfeil deutet die Schwenkmöglichkeit der ersten Blende 5 um eine Achse 24 an. Die Achse 24 ist motorisch und/oder manuell bedienbar - insbesondere ferngesteuert.

Der linke Hauptstrahlengang 4 verläuft vom Objekt 9 durch den linken Teil der Mikroskopoptik 10 durch eine Brücke 11 für Assistentenanschluss, die in diesem Beispiel eingezeichnet ist, für die Erfindung jedoch nicht unbedingt erforderlich ist. Beim vorliegenden Aufbau wäre jedoch sichergestellt, dass, selbst wenn der Chirurg seinen Blick auf das Objekt unterbricht, ein Assistent noch immer eine volle mikroskopische Sicht auf das Objekt hätte.

Nach der Brücke 11 ist eine erfindungsgemäße zweite Blende 12 schwenkbar angeordnet, mit der - manuell oder motorisch gesteuert - der Strahlengang zum Objekt unterbrochen werden kann. Eine Schwenkachse 13 und ein Bedienhebel 14 sind angedeutet.

Im weiteren Verlauf des Strahlenganges zum Okular 15 folgt der Strahlenteiler 4 und eine Schwenkvorrichtung 16 zur Adaption des Neigungswinkels des Okulars 15. Diese Schwenkvorrichtung erhöht den Bedienkomfort, ist jedoch nicht erfindungswesentlich.

Ebenso nicht erfindungswesentlich ist eine symbolisch dargestellte Videokamera 17 zum Aufnehmen von Bildern des Objektes 9 durch den rechten Hauptstrahlengang 18. Der dargestellte weitere Assistententubus 19 ist ebenso nicht erfindungswesentlich. Im Unterschied zur Brücke 11 für einen Assistententubus ist dieser Tubus 19 jedoch nach einer dritten Blende 20 im rechten Hauptstrahlengang 18 angeordnet, die vergleichbar zur zweiten Blende aufgebaut ist.

Die zweite und dritte Blende 12 und 20 können miteinander verbunden sein, um synchron bedienbar zu sein, sie können jedoch im Sinne der Flexibilität der Erfindung gemäß den obigen Möglichkeitsangaben auch getrennt bedienbar ausgestattet sein.

In der Zeichnung wird jeweils eine schwenkbare Blende dargestellt und beschrieben. Die Erfindung ist jedoch nicht auf solche Blenden eingeschränkt. Dem Fachmann sind eine Vielzahl von verschiedenen Blenden geläufig, mit denen er den erfindungsgemäß angestrebten Effekt ebenso erzielen könnte. Darunter fallen z.B. schiebbare Blenden, LCD-optische Shutter und Irisblenden.

### Bezugszeichenliste

- 1: Display
- 2: Einspiegeloptik
- 3: Strahlenteiler
- 4: linker Hauptstrahlengang
- 5: erste Blende
- 6: Beleuchtungsoptik mit Lichtleiterkabel
- 7: Lichtquelle für Display (1)
- 8: Rechner für Bildeinspiegelung und/oder -korrelation oder Steuerung für konvertiertes Videobild am Display (5)
- 9: Objekt
- 10: Mikroskopoptik
- 11: Brücke für Assistentenanschluss
- 12: zweite Blende
- 13: Achse für zweite Blende (12)
- 14: Hebel für Betätigung der Blende (12)
- 15: Okularoptik
- 16: Ergotubus, Schwenkvorrichtung zur Neigungseinstellung der Okularoptik (15)
- 17: Videokamera (Modul mit Optik)
- 18: rechter Hauptstrahlengang
- 19: zweiter Assistententubus
- 20: dritte Blende
- 21: Einspiegelstrahlengang
- 22: Hauptobjektiv
- 23: Videoaufzeichnungsvorrichtung
- 24: Achse

## Patentansprüche

1. Stereo-Operationsmikroskop mit einem Rechner (8), mit einem Hauptobjektiv, einem linken (4) und einem rechten Hauptstrahlengang (18) und je einem Einspiegelstrahlengang (21) mit je einem Strahlenteiler (3) in jedem Hauptstrahlengang (4) für das Einspiegeln von Bildern, die dem Bild des Objektes durch den Rechner (8) korreliert überlagert werden, **dadurch gekennzeichnet, dass** zwischen jedem Strahlenteiler (3) und dem Hauptobjektiv (22) eine wahlweise bedienbare Blende (12, 20) für das Unterbrechen des jeweiligen Hauptstrahlengangs (4, 18) angeordnet ist, wobei die bedienbaren Blenden (12, 20) synchron und auch getrennt bedienbar ausgestaltet sind.

2. Mikroskop nach Anspruch 1, **dadurch gekennzeichnet, dass** die Blenden (12, 20) manuell oder motorisch fernbedienbar sind und/oder dass eine weitere Blende (5) vorgesehen ist für die Unterbrechung eines Beleuchtungsstrahlenganges (6) einer Lichtquelle (7), die ebenso manuell oder motorisch fernbedienbar ist.

3. Mikroskop nach einem der vorhergehenden Ansprüche, **dadurch gekennzeichnet, dass** für die Blenden (12, 20) eine Kopplung mit einer intelligenten, rechnergestützten automatischen Blendensteuerung vorgesehen ist.

4. Mikroskop nach einem der vorhergehenden Ansprüche, **dadurch gekennzeichnet, dass** dem Einspiegelstrahlengang (21) ein Display (1) zugeordnet ist, das mittels wahlweise aktivierbarer Blende (5) abgedunkelt oder aufgehellt werden kann.

5. Mikroskop nach Anspruch 4, **dadurch gekennzeichnet, dass** die Blende (5) hinter dem Display (1) angeordnet ist und dort bei Bedarf einen Beleuchtungs-Strahlengang (6) unterbricht.

6. Mikroskop nach einem der vorhergehenden Ansprüche, **dadurch gekennzeichnet, dass** wenigstens einer Blende (5, 12, 20) eine Steuerung zugeordnet ist, die die Blendenstellung mittels Fernsteuerung in Abhängigkeit von der Art der jeweils gewählten Einspiegelsignale verändert.

7. Mikroskop nach Anspruch 6, **dadurch gekennzeichnet, dass** die Steuerung dem Anwender ein Durchgriffsrecht zur willkürlichen Änderung der automatisch getroffenen Blendenstellung einräumt.

8. Mikroskop nach einem der vorhergehenden Ansprüche, **dadurch gekennzeichnet, dass** zwischen der Blende (12, 20) und dem Hauptobjektiv (22) ein Anschluss (11) für einen Assistenten angeordnet ist.

9. Mikroskop nach einem der vorhergehenden Ansprüche, **dadurch gekennzeichnet, dass** zwischen den Blenden (12, 20) und einem Okular (15) des Mikroskops ein Videoaufzeichnungsmodul und/oder ein weiterer Assistentenanschluss (19) und/oder ein Schwenktubus (16) angeordnet ist/sind.

## Claims

1. A stereo-surgical microscope with a computer (8), with a main objective, a left-hand main beam path (4) and a right-hand main beam path (18), and one inwardly reflecting beam path (21) with one beam splitter (3) in each main beam path (4) for reflecting in images, which can be superimposed in a correlated manner on the image of the object by the computer (8), **characterised in that** an optionally operable diaphragm (12, 20) is arranged between each beam splitter (3) and the main objective (22) for the purpose of interrupting the respective main beam path (4, 18), wherein the operable diaphragms (12, 20) are configured such that they can be operated synchronously and also separately.

2. The microscope according to Claim 1, **characterised in that** the diaphragms (12, 20) can be remotely operated manually or by motor, and/or **in that** a further diaphragm (5) is provided for the purpose of interrupting an illuminating beam path (6) of a light source (7), which can likewise be remotely operated manually or by motor.

3. The microscope according to one of the preceding claims, **characterised in that** a coupling with an intelligent, computer-aided automatic diaphragm control is provided for the diaphragms (12, 20).

4. The microscope according to one of the preceding claims, **characterised in that** the inwardly reflecting beam path (21) is assigned a display (1), which can be darkened or lightened by means of a diaphragm (5) that can be optionally activated.

5. The microscope according to Claim 4, **characterised in that** the diaphragm (5) is arranged behind the display (1) and interrupts an illuminating beam path (6) there if required.

6. The microscope according to one of the preceding claims, **characterised in that** at least one diaphragm (5, 12, 20) is assigned a control, which varies the diaphragm setting by means of remote control as a function of the type of the respectively selected inwardly reflected signals.

7. The microscope according to Claim 6, **characterised in that** the control grants the user a right to intervene to make an arbitrary change to the diaphragm setting automatically made.

8. The microscope according to one of the preceding claims, **characterised in that** a connection (11) for an assistant is arranged between the diaphragm (12, 20) and the main objective (22).

9. The microscope according to one of the preceding claims, **characterised in that** a video recording module and/or a further assistant connection (19) and/or a swivelling tube (16) is/are arranged between the diaphragms (12, 20) and an eyepiece (15) of the microscope.

## Revendications

1. Stéréo-microscope pour interventions chirurgicales comprenant un ordinateur (8), un trajet de rayon principal gauche (4) et un trajet de rayon principal droit (18) et comportant chacun un trajet de rayon réfléchi (21) avec à chaque fois un fractionneur de rayon (3) dans chaque trajet de rayon principal (4) pour la réflexion d'images qui peuvent être superposées de façon corrélée à l'image de l'objet par l'ordinateur (8), **caractérisé en ce qu'**un obturateur (12, 20) pouvant être commandé à volonté est disposé entre chaque fractionneur de rayon (3) et l'objectif principal (22) pour interrompre le trajet de rayon principal (4, 18) spécifique, les obturateurs (12, 20) pouvant être commandés étant conçus de façon à pouvoir être commandés de façon synchrone et également séparée.

2. Microscope selon la revendication 1, **caractérisé en ce que** les obturateurs (12, 20) peuvent être commandés à distance de manière manuelle ou motorisée et/ou **en ce qu'**il est prévu un autre obturateur (5) pour l'interruption d'un trajet de rayon d'éclairage (6) d'une source de lumière (7), qui peut être commandée à distance aussi bien de manière manuelle que ou motorisée.

3. Microscope selon l'une des revendications précédentes, **caractérisé en ce qu'**un couplage avec une commande d'obturateur automatique, intelligente et automatisée est prévue pour les obturateurs (12, 20).

4. Microscope selon l'une des revendications précédentes, **caractérisé en ce qu'**un écran (1) est associé au trajet de rayon réfléchi (21), lequel peut être assombri ou éclairci au moyen d'un obturateur (5) activable à volonté.

5. Microscope selon la revendication 4, **caractérisé en ce que** l'obturateur (5) est disposé derrière l'écran (1) et qu'il y interrompt, au besoin, un trajet de rayon d'éclairage (6).

6. Microscope selon l'une des revendications précédentes, **caractérisé en ce qu'**une commande est associée à au moins un obturateur (5, 12, 20), laquelle modifie la position de l'obturateur par commande à distance en fonction de la nature des signaux réfléchis à chaque fois sélectionnés.

7. Microscope selon la revendication 6, **caractérisé en ce que** la commande octroie à l'utilisateur un droit d'accès pour la modification arbitraire de la position adoptée automatiquement par l'ordinateur.

8. Microscope selon l'une des revendications précédentes, **caractérisé en ce qu'**un branchement (11) pour un assistant est disposé entre l'obturateur (12, 20) et l'objectif principal (22).

9. Microscope selon l'une des revendications précédentes, **caractérisé en ce qu'**un module d'enregistrement vidéo et/ou un autre raccord pour assistant (19) et/ou un tube orientable (16) est/sont disposés entre les obturateurs (12, 20) et un oculaire (15) du microscope.
